# EUROPÄISCHE PATENTSCHRIFT

(11) **EP 3 710 299 B1**
(45) Veröffentlichungstag und Bekanntmachung des Hinweises auf die Patenterteilung: **18.08.2021**
(21) Anmeldenummer: 18796624.7
(22) Anmeldetag: 29.10.2018
(51) Int. Cl.: B60K 6/485

(54) **VERFAHREN ZUR ERMITTLUNG VON KUPPLUNGSPARAMETERN EINES MINDESTENS EINE KUPPLUNG AUFWEISENDEN AUTOMATIKGETRIEBES**
METHOD FOR DETERMINING CLUTCH PARAMETERS OF AN AUTOMATIC TRANSMISSION HAVING AT LEAST ONE CLUTCH
PROCÉDÉ DE DÉTERMINATION DE PARAMÈTRES D'EMBRAYAGE D'UNE BOÎTE DE VITESSES AUTOMATIQUE PRÉSENTANT AU MOINS UN EMBRAYAGE

(30) Priorität: 17.11.2017 DE 102017220577
(43) Veröffentlichungstag der Anmeldung: 23.09.2020
(73) Patentinhaber: Volkswagen Aktiengesellschaft, 38440 Wolfsburg (DE)
(72) Erfinder: ZIMMERMANN, Jannis, 38106 Braunschweig (DE)
(86) Internationale Anmeldenummer: PCT/EP2018/079603
(87) Internationale Veröffentlichungsnummer: WO 2019/096573

(56) Entgegenhaltungen:
- EP-A2- 2 325 512
- EP-B1- 2 100 050
- DE-A1-102015 220 059
- DE-B4- 10 308 517

## Beschreibung

Die Erfindung betrifft ein Verfahren zur Ermittlung von Getriebe- und/oder Kupplungsparametern eines mindestens eine Kupplung aufweisenden Automatikgetriebes eines Kraftfahrzeuges zur Grundeinmessung des Automatikgetriebes, insbesondere eines automatisierten Handschaltgetriebes und/oder eines Doppelkupplungsgetriebes mit den Merkmalen des Oberbegriffs des Patentanspruchs 1, wie offenbart in dem Dokument DE 10 2015 220059 A1.

Im Stand der Technik sind unterschiedliche Getriebe bekannt, insbesondere sind Automatikgetriebe bekannt, die mindestens eine Kupplung, insbesondere eine Reibkupplung aufweisen und auf unterschiedliche Art und Weise ausgebildet sein können. Insbesondere sind derartige, mindestens eine Kupplung aufweisende Automatikgetriebe dann als automatisierte Handschaltgetriebe und/oder als Doppelkupplungsgetriebe, insbesondere als automatisierte Doppelkupplungsgetriebe ausgebildet.

Die Antriebsstränge entsprechender Kraftfahrzeuge werden zumindest teilweise vorgefertigt und dann mit der Karosserie des Kraftfahrzeugs, insbesondere bei der sogenannten "Hochzeit", entsprechend wirksam verbunden bzw. miteinander entsprechend gekoppelt. Insbesondere zuvor werden aber die Getriebe- und/oder Kupplungsparameter des jeweiligen Antriebsstranges grundsätzlich "eingemessen" durch eine sogenannte "Grundeinmessung". Oder anders ausgedrückt: Zur Grundeinmessung des Automatikgetriebes wird das jeweilige mindestens eine Kupplung aufweisende Automatikgetriebe (und/oder weitere entsprechende Komponenten des Antriebsstranges) auf einem sogenannten "EOL-Prüfstand" positioniert, damit die jeweiligen Komponenten dann dort entsprechend eingestellt und/oder so adaptiert werden können, dass die insbesondere bei der Fertigung aufgekommenen unterschiedlichen Fertigungstoleranzen dann keinen Einfluss mehr auf die Steuerung / Ansteuerung des Automatikgetriebes und/oder auf die Steuerung / Ansteuerung der Kupplung haben.

Bei der sogenannten "Grundeinmessung" eines Automatikgetriebes werden dann insbesondere das Schleppmoment und/oder der Kisspoint der Kupplung mit Hilfe mindestens einer ansteuerbaren Synchronisationsvorrichtung ermittelt. Die Kupplung des Automatikgetriebes weist mindestens eine mit einer Verbrennungskraftmaschinen-Ausgangswelle wirksam verbindbare und/oder wirksam verbundene Antriebsseite auf, insbesondere kann die Antriebsseite der Kupplung über die sogenannte "K0-Kupplung" mit einer Verbrennungskraftmaschinen-Ausgangswelle wirksam verbindbar sein. Weiterhin weist die Kupplung mindestens eine mit mindestens einer Getriebeeingangswelle wirksam verbundene Abtriebsseite auf. Die Kupplung ist insbesondere als eine nasslaufende Reibkupplung und/oder Lamellenkupplung ausgebildet, wobei die Getriebeausgangswelle und/oder -je in Abhängigkeit des jeweiligen spezifisch ausgebildeten Automatikgetriebes - die Triebwelle oder auch die Triebwellen des Getriebes insbesondere dann auf dem EOL-Prüfstand blockiert werden bzw. blockiert sind, insbesondere die Parksperre des Automatikgetriebes eingelegt ist, die Antriebsseite der Kupplung aber antreibbar ist bzw. angetrieben wird.

Im Stand der Technik, aus der DE 103 08 517 B4, ist ein Verfahren zur Ermittlung von Getriebe- und/oder von Kupplungsparametern eines mindestens eine Kupplung aufweisenden Automatikgetriebes, das als Doppelkupplungsgetriebe ausgebildet ist, bekannt, wobei auf dem EOL-Prüfstand die Antriebsseite einer Kupplung durch die Verbrennungskraftmaschinen-Ausgangswelle wirksam angetrieben wird und dann die Parameter dieser der freilaufenden Getriebeeingangswelle zugeordneten jeweiligen Kupplung und/oder einer ansteuerbaren Synchronisationsvorrichtung auf bestimmte Art und Weise ermittelt werden. Die Grundeinmessung dieses auf dem beim EOL-Prüfstand positionierten Antriebsstranges bzw. dort positionierten Automatikgetriebes (Doppelkupplungsgetriebes) erfolgt daher bei laufendem Verbrennungskraftmotor und einer über die jeweilige angetriebene Kupplung dann angetriebene freilaufenden Getriebeeingangswelle, wobei die Getriebeeingangswelle insbesondere zunächst deswegen "freilaufen" kann, weil alle dieser jeweiligen Getriebeeingangswelle zugeordneten Synchronisationsvorrichtungen zunächst in die Neutralstellung geschaltet sind. Bei dem hier beschriebenen Verfahren wird auf sehr spezifische Weise dann das Schleppmoment der Kupplung bzw. der Kisspoint ermittelt bzw. eine Kupplungskennlinienadaption durchgeführt.

Weiterhin wird im Stand der Technik, nämlich in der EP 2 100 050 B1, ein weiteres Verfahren für die Adaption der Kennlinie einer Kupplung beschrieben bzw. offenbart. Hierbei wird dieses Verfahren aber nur dann durchgeführt, wenn eine definierte Änderung der Getriebeeingangswellendrehzahl erfolgt, nämlich wenn die Getriebeeingangswellendrehzahl einen vorgegebenen Grenzwert unter bestimmten Bedingungen überschreitet.

Schließlich ist aus der DE 10 2015 220 059 A1 ein Verfahren zum Lernen von Synchronisationsschwellen eines Doppelkupplungsgetriebes in einem Kraftfahrzeug bekannt. Bei dem hier beschriebenen Verfahren weist das Doppelkupplungsgetriebe eine freilaufgeschaltete Gangstufe auf, wobei die Antriebsseite der Kupplung in einer zur Drehrichtung der Verbrennungskraftmaschinen-Ausgangswelle umgekehrten Drehrichtung von einem Elektromotor antreibbar ist. Hierdurch wird der Freilauf aktiviert, wobei nach der Aktivierung des Freilaufs dann die Synchronisationsschwellen bei einem stehenden Fahrzeug ermittelt werden.

Die im Stand der Technik bekannten Verfahren sind aber noch nicht optimal ausgebildet, insbesondere ist eine Grundeinmessung eines Automatikgetriebes auf einem EOL-Prüfstand durchaus problematisch. Beispielsweise sind auch spezifisch ausgebildete Automatikgetriebe bekannt, wobei bei derartigen spezifisch ausgebildeten Automatikgetrieben einer Gangstufe, insbesondere der ersten Gangstufe, ein Freilauf zugeordnet ist bzw. diese entsprechende Gangstufe mit Hilfe eines Freilaufes "freilaufgeschaltet" ist. Hierbei überholt / öffnet der Freilauf, wenn die Schaltraddrehzahl (Antriebswellendrehzahl durch Übersetzung dieser Gangstufe) kleiner ist als die Drehzahl der entsprechenden Getriebeausgangswelle / Triebwelle. Liegt ein Antriebsmoment am Schaltrad mit gleicher Drehzahl wie die Getriebeausgangswellendrehzahl / Triebwellendrehzahl an, schließt der Freilauf. Der Freilauf überträgt dann das Drehmoment, Schaltrad und Getriebeausgangswelle / Triebwelle sind im Gleichlauf. Ein derartig ausgebildetes Automatikgetriebe, wie zuvor beschrieben, lässt sich nicht auf einem EOL-Prüfstand einmessen, da dann die Getriebeausgangswellen und/oder die Triebwellen des so ausgebildeten Automatikgetriebes blockiert sind, insbesondere dann die Parksperre eingelegt ist, und dann der oben erwähnte Freilauf zwingend geschlossen ist, da die Getriebeausgangswelle bzw. die jeweilige Triebwelle steht (und somit das Schaltrad nicht langsamer drehen kann). Eine entsprechende Grundeinmessung des Automatikgetriebes mit einer zuvor beschriebenen freilaufgeschalteten Gangstufe ist daher mit dem üblichen Verfahren so nicht möglich. Weiterhin ist unter ökologischen Gesichtspunkten insbesondere bei den auf EOL-Prüfständen durchgeführten Grundeinmessungen problematisch, dass die Verbrennungskraftmaschine läuft und einerseits Kraftstoff verbraucht wird, sowie andererseits Abgase entstehen. Unter den Gesichtspunkten eines Kraftstoffverbrauches sowie einer Abgasentstehung sind daher die Grundeinmessungen der im Stand der Technik bekannten Automatikgetriebe daher auch noch nicht optimal ausgebildet.

Der Erfindung liegt daher die Aufgabe zugrunde, dass eingangs genannte Verfahren nun derart auszugestalten und weiterzubilden, dass einerseits unter ökologischen Gesichtspunkten das Verfahren verbessert ist, andererseits die Grundeinmessung eines insbesondere eine freilaufgeschaltete Gangstufe aufweisenden Automatikgetriebes auf einem EOL-Prüfstand ermöglicht ist.

Die zuvor aufgezeigte Aufgabe ist nun durch die Merkmale des Patentanspruches 1 gelöst.

Die Antriebsseite der Kupplung wird mit Hilfe eines Elektromotors angetrieben, wobei mindestens eine freilaufgeschaltete Gangstufe vorhanden ist und wobei die Antriebsseite der Kupplung in einer zur Drehrichtung der Verbrennungskraftmaschinen-Ausgangswelle umgekehrten Drehrichtung vom Elektromotor angetrieben wird. Hierdurch wird zunächst erzielt, dass die Grundeinmessung eines derartig ausgebildeten Automatikgetriebes insbesondere an einem EOL-Prüfstand durchgeführt werden kann, nämlich nun in umgekehrter Drehrichtung (entgegen der Drehrichtung der Verbrennungskraftmaschine) die Grundeinmessung des Automatikgetriebes durchgeführt wird, nämlich die Antriebsseite der Kupplung nun mit Hilfe des Elektromotors in - zur Drehrichtung der Verbrennungskraftmaschine - entgegengesetzter Richtung angetrieben wird. Hierbei öffnet dann auch der Freilauf, so dass eine Drehung der Getriebeeingangswelle des Automatikgetriebes ermöglicht ist, obwohl insbesondere auch bei eingelegter Parksperre bzw. auf dem EOL-Prüfstand stehenden Kraftfahrzeug die Getriebeausgangswelle und/oder die Triebwelle (n) stehen bzw. blockiert sind. Die Grundeinmessung des Automatikgetriebes bzw. die Ermittlung der Getriebe- und/oder Kupplungsparameter erfolgt daher nun bei einer zur Drehrichtung der Verbrennungskraftmaschine bzw. der Verbrennungskraftmaschinen-Ausgangswelle umgekehrten Drehrichtung. Für den Fall, dass der Antriebsstrang als ein Hybrid-Antriebsstrang ausgebildet ist, insbesondere das Kraftfahrzeug als ein Hybrid-Fahrzeug ausgebildet ist, kann mit Hilfe des Elektromotors des Antriebsstranges die Antriebsseite der Kupplung angetrieben werden. Insbesondere wenn das Kraftfahrzeug nicht als ein Hybrid-Fahrzeug ausgebildet ist, kann die Antriebsseite der Kupplung dann von einem extern vorhandenen Elektromotor angetrieben werden. Damit sind eine Vielzahl von Möglichkeiten realisiert, insbesondere aber die eingangs genannten Nachteile vermieden.

Das erfindungsgemäße Verfahren wird insbesondere nun in folgenden Schritten durchgeführt:
In einem ersten Schritt zu einem ersten Zeitpunkt, wird die Kupplung mit einer bestimmten Kupplungskraft geschlossen und ein bestimmtes Kupplungsmoment wird realisiert. Hierdurch wird die Drehzahl der Getriebeeingangswelle auf die Drehzahl der Antriebsseite der Kupplung betragsmäßig hochgezogen. Die Drehzahl der Getriebeeingangswelle erreicht im Wesentlichen die Drehzahl der Antriebsseite der Kupplung zu einem zweiten Zeitpunkt, insbesondere unter Beibehaltung eines Mindest-Schlupfes und/oder einer stationären Differenzdrehzahl (,wobei in den zuvor erwähnten Fällen dann die Drehzahl der jeweiligen Wellen "im Wesentlichen" gleich sind, insbesondere durch einen Mindest-Schlupf oder eine bestimmte Differenzdrehzahl variieren).

In einem zweiten Schritt zu einem dritten Zeitpunkt, wird die Synchronisationsvorrichtung angesteuert, nämlich ein Ansynchronisationsvorgang einer Gangstufe des Getriebes mit Hilfe der Synchronisationsvorrichtung gestartet. Hierbei wird die Synchronisationsvorrichtung mit einer, insbesondere kontinuierlich ansteigenden Synchronisationskraft beaufschlagt.

Bei einer dann ermittelten bestimmten ersten Synchronisationskraft zu einem vierten Zeitpunkt, reißt die Drehzahl der Getriebeeingangswelle von der Drehzahl der Antriebsseite der Kupplung ab. Hierdurch ist dann das Schleppmoment der Kupplung ermittelbar und/oder berechenbar.

Insbesondere zu einem fünften Zeitpunkt, wenn zwischen der Getriebeeingangswelle und der Antriebsseite der Kupplung ein bestimmter Schlupf und/oder eine bestimmte Drehzahldifferenz ermittelt wird, wird die dann anliegende bestimmte zweite Synchronisationskraft ermittelt. Diese zweite Synchronisationskraft wird zur Bestimmung des Kisspointes der Kupplung verwendet bzw. herangezogen, insbesondere wird dann zunächst das entsprechende Synchronisationsmoment ermittelt.

In den weiteren Verfahrensschritten wird vor der Ermittlung und/oder Adaption des Kisspointes der Kupplung dann zunächst die Synchronisationsvorrichtung in ihre Neutralstellung verbracht, so dass die Drehzahl der Getriebeeingangswelle sich der Drehzahl der Antriebsseite der Kupplung betragsmäßig annähert bzw. im Wesentlichen auf die Drehzahl der Antriebsseite der Kupplung gebracht wird, insbesondere die Drehzahl der Getriebeeingangswelle die Drehzahl der Antriebsseite der Kupplung zu einem sechsten Zeitpunkt im Wesentlichen erreicht.

Bevor nun der Kisspoint ermittelt und/oder adaptiert wird, wird die Kupplung mit einem maximalen Kupplungsdruck, insbesondere nach dem fünften Zeitpunkt und/oder nach dem sechsten Zeitpunkt, insbesondere aber nach dem sechsten Zeitpunkt geschlossen. Die Drehzahl der Getriebeeingangswelle hat sich insbesondere zwischen dem fünften und dem sechsten Zeitpunkt der Drehzahl der Antriebsseite der Kupplung betragsmäßig angenähert bzw. insbesondere zum sechsten Zeitpunkt hat die Drehzahl der Getriebeeingangswelle die Drehzahl der Antriebsseite der Kupplung erreicht.

Nachdem die Kupplung mit einem maximalen Kupplungsdruck, insbesondere nach dem sechsten Zeitpunkt, geschlossen worden ist, wird die Synchronisationsvorrichtung mit der zuvor ermittelten zweiten Synchronisationskraft geschlossen und hiernach dann der Kupplungsdruck, insbesondere kontinuierlich reduziert. Insbesondere zu einem siebten Zeitpunkt, nämlich dann wenn die zweite Synchronisationskraft bzw. das korrespondierende Synchronisationsmoment den aktuell dann anliegenden Kupplungsdruck betragsmäßig übersteigt, reißt die Drehzahl der Getriebeeingangswelle von der Drehzahl der Antriebsseite der Kupplung ab. Wenn dann, insbesondere zu einem achten Zeitpunkt, ein bestimmter Schlupf und/oder eine bestimmte Drehzahldifferenz zwischen der Getriebeeingangswelle und der Antriebsseite der Kupplung anliegt, wird hierauf basierend dann der Kisspoint der Kupplung ermittelt und/oder im Folgenden adaptiert.

Mit dem Verfahren werden entscheidende Vorteile erzielt und die oben beschriebenen Nachteile vermieden.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche sowie aber nun auf die Beschreibung eines bevorzugten Ausführungsbeispiels anhand der nachfolgenden Beschreibung sowie der Zeichnung verwiesen werden. In der Zeichnung zeigt:
- Fig. 1: eine schematische Getriebedarstellung, eines insbesondere als automatisiertes Handschaltgetriebe ausgebildeten Doppelkupplungsgetriebes, wobei hier die erste Gangstufe als eine freilaufgeschaltete Gangstufe ausgebildet ist bzw. die erste Gangstufe einen Freilauf aufweist,
- Fig. 2: in schematischer Darstellung die Durchführung des erfindungsgemäßen Verfahrens mit den jeweiligen Verfahrensschritten in schematischer graphischer Darstellung.

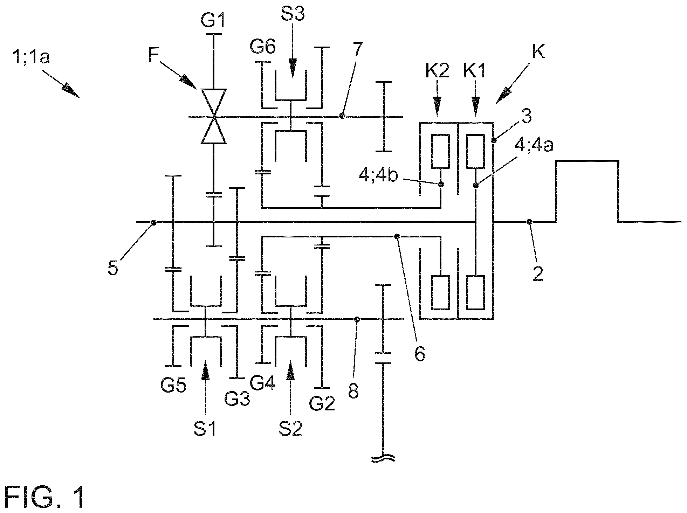

Die Fig. 1 bis 2 sollen ein Verfahren zur Ermittlung von Getriebe- und/oder von Kupplungsparametern eines mindestens eine Kupplung K, hier insbesondere zwei Kupplungen K1 bzw. K2 aufweisenden Automatikgetriebes 1, insbesondere zur Grundeinmessung des Automatikgetriebes 1, insbesondere hier eines automatisierten Handschaltgetriebes, das insbesondere als ein Doppelkupplungsgetriebe 1a ausgebildet ist, näher verdeutlichen.

Fig. 1 zeigt hier ein Automatikgetriebe 1, das hier insbesondere als ein automatisiertes Handschaltgetriebe, hier insbesondere als Doppelkupplungsgetriebe 1a ausgebildet ist und zwei Kupplungen K1 und K2 aufweist.

Mit dem hier im Folgenden näher beschriebenen Verfahren wird das Schleppmoment und/oder der Kisspoint einer Kupplung K, hier insbesondere der ersten Kupplung K1, mit Hilfe mindestens einer ansteuerbaren Synchronisationsvorrichtung S1 ermittelt. Die Kupplung K, hier insbesondere die Kupplungen K1 und K2 der dargestellten Doppelkupplung weisen mindestens eine mit einer Verbrennungskraftmaschinen-Ausgangswelle 2 wirksam verbindbare und/oder wirksam verbundene Antriebsseite 3 und mindestens eine mit einer Getriebeeingangswelle 5 wirksam verbundene Abtriebsseite 4 auf. Eine wirksam zwischen der Verbrennungskraftmaschinen-Ausgangswelle 2 und der Antriebsseite 3 der Kupplung K vorgesehene K0-Kupplung ist hier nicht explizit dargestellt.

Bei dem hier in Fig. 1 dargestellten Ausführungsbeispiel des dort dargestellten Doppelkupplungsgetriebes 1a ist die dortige Kupplung Kais Doppelkupplung ausgeführt und weist insbesondere zwei als Reibkupplung ausgeführte Kupplungen K1 und K2 auf. Die Doppelkupplung bzw. Kupplung K weist eine Antriebsseite 3 und eine Abtriebsseite 4 bzw. zwei Abtriebsseiten 4a und 4b auf, wobei hier insbesondere eine Abtriebsseite 4, nämlich die Abtriebsseite 4a der ersten Kupplung K1 mit der Getriebeeingangswelle 5 wirksam verbunden ist. Im geschlossenen Zustand der ersten Kupplung K1 kann dann ein entsprechendes Drehmoment von der Antriebsseite 3 der Kupplung über die Abtriebsseite 4, hier die Abtriebsseite 4a, auf die Getriebeeingangswelle 5 übertragen werden.

Die Getriebeeingangswelle 5 ist als erste Getriebeeingangswelle bezeichenbar, wobei das Doppelkupplungsgetriebe 1a auch eine zweite Getriebeeingangswelle 6 aufweist. Weiterhin ist mindestens eine Getriebeausgangswelle und/oder bei dem hier in Fig. 1 dargestellten Ausführungsbeispiel des hier dargestellten Doppelkupplungsgetriebes 1a sind zwei Triebwellen 7 und 8 vorgesehen, die wirksam mit einem nicht näher bezeichneten Achsdifferential verbunden sind.

Insbesondere auf einem EOL-Prüfstand, wenn das Automatikgetriebe 1, insbesondere das hier dargestellte Doppelkupplungsgetriebe 1a "grundsätzlich eingemessen" wird, wird die Antriebsseite 3 der Kupplung K, hier insbesondere der ersten Kupplung K1, angetrieben, wie bereits oben erläutert. Es darf an dieser Stelle nochmals darauf hingewiesen werden, dass bei dem hier dargestellten Automatikgetriebe 1, insbesondere dem hier dargestellten Doppelkupplungsgetriebe 1a, der Freilauf F der ersten Gangstufe G1 zugeordnet ist, so wie schematisch dargestellt. Das Doppelkupplungsgetriebe 1a weist hier mehrere Gangstufen G, insbesondere mindestens sechs Gangstufen G1 bis G6 und mehrere Synchronisationsvorrichtungen S, insbesondere mindestens drei Synchronisationsvorrichtungen S1 bis S3 auf.

Die Antriebsseite 3 der Kupplung K, hier insbesondere der ersten Kupplung K1, wird mit Hilfe eines hier nicht dargestellten Elektromotors angetrieben, wobei mindestens eine freilaufgeschaltete Gangstufe, insbesondere die erste Gangstufe G1 freilaufgeschaltet bzw. vorhanden ist und wobei die Antriebsseite 3 der Kupplung in einer zur Drehrichtung der Verbrennungskraftmaschinen-Ausgangswelle 2 umgekehrten Drehrichtung vom Elektromotor entsprechend angetrieben wird. Hierdurch werden die bereits eingangs genannten Nachteile vermieden und entsprechende Vorteile erzielt.

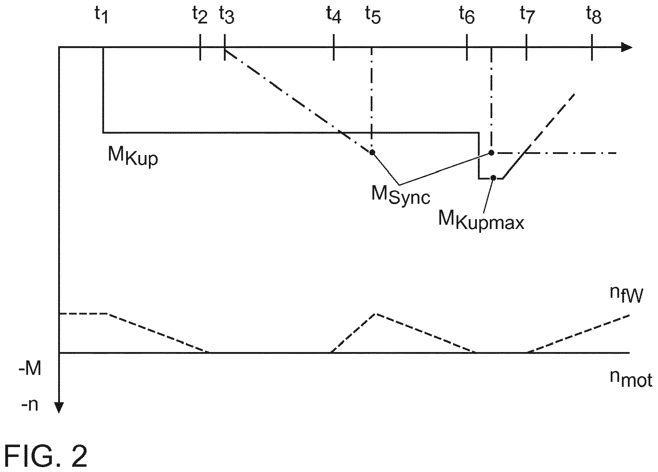

Im Folgenden dürfen die einzelnen Schritte des Verfahrens nochmal anhand der Fig. 2 nun näher erläutert werden. Vorab darf allgemein aber darauf hingewiesen werden, dass Fig. 2 - von der Darstellung her - negative Drehmomente und/oder Drehzahlen zeigt, da gemäß der Erfindung nun die Drehung der Antriebsseite 3 der Kupplung K und damit auch die Drehung der Getriebeeingangswelle 5 in einer zur - üblichen - Drehrichtung der Verbrennungskraftmaschinen-Ausgangswelle 2 umgekehrten Drehrichtung darstellen soll. Daher sind auf der y-Achse die dort dargestellten Momente bzw. Drehzahlen mit einem Minus-Zeichen (-) versehen worden. Bei der folgenden Beschreibung wird aber teils auf die in Fig. 2 dargestellten Werte / Punkte / Verläufe "betragsmäßig" Bezug genommen, hierauf darf an dieser Stelle nochmals hingewiesen werden.

Fig. 2 zeigt nun, dass in einem ersten Schritt zu einem ersten Zeitpunkt t₁, die Kupplung K, hier die erste Kupplung K1, mit einer bestimmten Kupplungskraft Mₖᵤₚ geschlossen wird und ein bestimmtes Kupplungsmoment realisiert wird. Die Drehzahl n_{fW} der freilaufenden Getriebeeingangswelle, hier der ersten Getriebeeingangswelle 5, wird danach auf die Drehzahl nₘₒₜ der Antriebsseite 3 der Kupplung, hier der ersten Kupplung K1 betragsmäßig hochgezogen, so wie in Fig. 2 aus der gestrichelten rampenförmigen Darstellung zwischen den Zeitpunkten t₁ und t₂ ersichtlich. Hierbei wird zunächst davon ausgegangen, dass die Drehzahl nₘₒₜ der Antriebsseite 3 der Kupplung im Wesentlichen der Drehzahl des Elektromotors (nₘₒₜ) entspricht. Zu einem zweiten Zeitpunkt t₂ erreicht dann die Drehzahl n_{fW} der Getriebeeingangswelle, hier der ersten Getriebeeingangswelle 5, die Drehzahl nₘₒₜ der Antriebsseite 3 der Kupplung K. Mit dem Ausdruck "im Wesentlichen" ist insbesondere gemeint, dass die Angleichung der Drehzahlen insbesondere unter Beibehaltung eines Mindest-Schlupfes und/oder einer stationären Differenzdrehzahl realisiert werden.

In einem zweiten Schritt zu einem dritten Zeitpunkt t₃, wird die Synchronisationsvorrichtung S, hier insbesondere die Synchronisationsvorrichtung S1 aus Fig. 1, angesteuert, nämlich ein Ansynchronisationsvorgang eine der freilaufenden Getriebeeingangswelle 5 zugeordneten Gangstufe des Getriebes, beispielsweise der dritten Gangstufe G3, mit Hilfe der Synchronisationsvorrichtung gestartet und die Synchronisationsvorrichtung S1 wird mit einer, insbesondere kontinuierlich ansteigenden Synchronisationskraft beaufschlagt. Dies ist in Fig. 2 zwischen dem dritten Zeitpunkt t₃ und einem fünften Zeitpunkt t₅ der Fall bzw. hier entsprechend dargestellt.

Wie aus Fig. 2 ersichtlich reißt zu einem vierten Zeitpunkt t₄, die Drehzahl n_{fW} der Getriebeeingangswelle 5 von der Drehzahl nₘₒₜ der Antriebsseite 3 der Kupplung K ab, wobei die hier dann anliegende erste Synchronisationskraft ermittelt und/oder bestimmt wird und hierdurch dann das Schleppmoment der Kupplung ermittelbar und/oder berechenbar ist.

Wie die Fig. 2 zeigt, wird insbesondere zu einem fünften Zeitpunkt t₅, eine dann anliegende bestimmte zweite Synchronisationskraft ermittelt, wenn zwischen der Getriebeeingangswelle, hier der ersten Getriebeeingangswelle 5, und der Antriebsseite 3 der Kupplung K, hier der ersten Kupplung K1, ein bestimmter Schlupf und/oder eine bestimmte Drehzahldifferenz ermittelt wird. Diese zweite Synchronisationskraft wird zur Bestimmung des Kisspointes der Kupplung, hier der ersten Kupplung K1 verwendet bzw. herangezogen, insbesondere wird dann zunächst ein korrespondierendes Synchronisationsmoment M_{sync} ermittelt.

Bevor nun der Kisspoint der Kupplung, hier der ersten Kupplung K1, ermittelt und/oder adaptiert wird, wird zunächst die angesteuerte Synchronisationsvorrichtung S1 in ihre Neutralstellung verbracht, insbesondere nach dem fünften Zeitpunkt t₅. Hierdurch nähert sich die Drehzahl n_{fW} der Getriebeeingangswelle 5 der Drehzahl nₘₒₜ der Antriebsseite 3 der Kupplung K, hier der Kupplung K1 betragsmäßig an bzw. wird im Wesentlichen auf die Drehzahl nₘₒₜ der Antriebsseite 3 der Kupplung K, hier der ersten Kupplung K1, gebracht. Insbesondere zu einem sechsten Zeitpunkt t₆ erreicht die Drehzahl n_{fW} der Getriebeeingangswelle 5 die Drehzahl nₘₒₜ der Antriebsseite 3 der Kupplung K, so wie in Fig. 2 dargestellt.

Weiterhin ist aus Fig. 2 ersichtlich, dass die Kupplung K, hier die erste Kupplung K1, mit einem maximalen Kupplungsdruck M_{Kupmax}, insbesondere aber nach dem fünften Zeitpunkt t₅ und/oder nach dem sechsten Zeitpunkt t₆, insbesondere aber erst nach dem sechsten Zeitpunkt t₆ geschlossen wird. Die Drehzahl n_{fW} der Getriebeeingangswelle 5 hat sich bei dem in Fig. 2 dargestellten Ausführungsbeispiel dann bereits der Drehzahl nₘₒₜ der Antriebsseite 3 der Kupplung K, hier der ersten Kupplung K1, angenähert bzw. hat die Drehzahl n_{fW} der Getriebeeingangswelle 5 bereits die Drehzahl nₘₒₜ der Antriebsseite 3 der Kupplung K erreicht, wenn die Kupplung K, hier die erste Kupplung K1 mit dem maximalen Kupplungsdruck M_{Kupmax} geschlossen wird.

In einem weiteren Schritt, insbesondere nach dem Anlegen des maximalen Kupplungsdruck M_{Kupmax} wird die Synchronisationsvorrichtung S1 mit der zuvor ermittelten zweiten Synchronisationskraft geschlossen bzw. das hierzu korrespondierende Synchronisationsmoment M_{Sync} angelegt. Dies ist in Fig. 2 insbesondere zwischen dem Zeitpunkt t₆ und dem siebten Zeitpunkt t₇ der Fall bzw. entsprechend dargestellt. Hiernach wird der Kupplungsdruck vom Kupplungsdruck M_{Kupmax} ausgehend, insbesondere kontinuierlich reduziert. Insbesondere zu einem siebten Zeitpunkt t₇, insbesondere dann wenn die zweite Synchronisationskraft bzw. das Synchronisationsmoment M_{sync} den aktuell dann anliegenden Kupplungsdruck betragsmäßig übersteigt, reißt die Drehzahl n_{fW} der Getriebeeingangswelle 5 von der Drehzahl nₘₒₜ der Antriebsseite 3 der Kupplung K, hier der ersten Kupplung K1 ab. Dies ist in Fig. 2 gut ersichtlich dargestellt.

Insbesondere dann, wenn, insbesondere zu einem achten Zeitpunkt t₈, ein bestimmter Schlupf und/oder eine bestimmte Drehzahldifferenz zwischen der Getriebeeingangswelle 5 und der Antriebsseite 3 der Kupplung K anliegt, wird hierauf basierend dann der Kisspoint der Kupplung ermittelt und/oder dieser beim laufenden Verfahren dann im Nachhinein insbesondere später entsprechend adaptiert.

Wie bereits eingangs erwähnt ist das Automatikgetriebe 1 insbesondere als ein Doppelkupplungsgetriebe 1a ausgebildet, aber auch andere Formen von Automatikgetrieben sind denkbar. Die bekannten weiteren Komponenten, wie ein Steuergerät, Drehzahlsensoren zur Ermittlung, Messung der jeweiligen aktuellen Drehzahlen oder dergleichen, sind entsprechend vorgesehen bzw. vorhanden.

### Bezugszeichenliste

- 1: Automatikgetriebe
- 1a: Doppelkupplungsgetriebe
- 2: Verbrennungskraftmaschinen-Ausgangswelle
- 3: Antriebsseite
- 4: Abtriebsseite
- 4a, 4b: Abtriebsseite der Kupplung K1 / K2
- 5: erste Getriebeeingangswelle
- 6: zweite Getriebeeingangswelle
- 7: Triebwelle
- 8: Triebwelle

- M_{Sync}: Synchronisationsmoment
- M_{Kup}: Kupplungskraft / Kupplungsmoment
- M_{Kupmax}: maximale Kupplungskraft / maximaler Kupplungsmoment
- K, K1, K2: Kupplung, erste bzw. zweite Kupplung
- S, S1 bis S3: Synchronisationsvorrichtungen
- F: Freilauf
- t₁ bis t₈: erster bis achter Zeitpunkt
- G, G1 bis G6: Gangstufen / Gänge
- n_{fW}: Drehzahl der Getriebeeingangswelle
- nₘₒₜ: Drehzahl der Antriebsseite der Kupplung

## Patentansprüche

1. Verfahren zur Ermittlung von Getriebe- und/oder Kupplungsparametern eines mindestens eine Kupplung (K) aufweisenden Automatikgetriebes (1) eines Kraftfahrzeuges zur Grundeinmessung des Automatikgetriebes (1), insbesondere eines automatisierten Handschaltgetriebes und/oder eines Doppelkupplungsgetriebes (1a), wobei ein Schleppmoment, oder ein Schleppmoment und der Kisspoint der Kupplung mit Hilfe mindestens einer ansteuerbaren Synchronisationsvorrichtung (S1) einer Gangstufe (G3) des Getriebes ermittelt wird, wobei die Kupplung (K) mindestens eine mit einer Verbrennungskraftmaschinen-Ausgangswelle (2) wirksam verbindbare und/oder wirksam verbundene Antriebsseite (3) und mindestens eine mit mindestens einer Getriebeeingangswelle (5) wirksam verbundene Abtriebsseite (4) aufweist, wobei eine Getriebeausgangswelle und/oder eine Triebwelle(n) des Getriebes blockiert werden bzw. sind, wobei die Antriebsseite (3) der Kupplung (K) angetrieben wird, wobei die Antriebsseite (3) der Kupplung (K) mit Hilfe eines Elektromotors angetrieben wird, wobei mindestens eine freilaufgeschaltete Gangstufe (G1) vorhanden ist und wobei die Antriebsseite (3) der Kupplung (K) in einer zur Drehrichtung der Verbrennungskraftmaschinen-Ausgangswelle (2) umgekehrten Drehrichtung vom Elektromotor angetrieben wird, **dadurch gekennzeichnet, dass** in einem ersten Schritt zu einem ersten Zeitpunkt (t₁) die Kupplung (K) mit einer bestimmten Kupplungskraft geschlossen wird und ein bestimmtes Kupplungsmoment (M_{Kup}) realisiert wird, dass die Drehzahl (n_{fW}) der Getriebeeingangswelle (5) danach auf die Drehzahl (nₘₒₜ) der Antriebsseite (3) der Kupplung (K) betragsmäßig hochgezogen wird und/oder die Drehzahl (n_{fW}) der Getriebeeingangswelle (5) in einem zweiten Zeitpunkt (t₂) im Wesentlichen, insbesondere unter Beibehaltung eines Mindest-Schlupfes und/oder einer stationären Differenzdrehzahl, die Drehzahl der Antriebsseite der Kupplung erreicht, dass in einem zweiten Schritt zu einem dritten Zeitpunkt (t₃) die Synchronisationsvorrichtung (S1) angesteuert wird, nämlich ein Ansynchronisationsvorgang der besagten Gangstufe (G3) des Getriebes mit Hilfe der Synchronisationsvorrichtung (S1) gestartet wird und die Synchronisationsvorrichtung (S1) mit einer, insbesondere kontinuierlich ansteigenden Synchronisationskraft beaufschlagt wird, und dass bei einer dann ermittelten bestimmten ersten Synchronisationskraft zu einem vierten Zeitpunkt (t₄) die Drehzahl (n_{fW}) der Getriebeeingangswelle (5) von der Drehzahl (nₘₒₜ) der Antriebsseite (3) der Kupplung (K) abreißt und hierdurch dann das Schleppmoment der Kupplung ermittelbar und/oder berechenbar ist.

2. Verfahren nach Anspruch 1, **dadurch gekennzeichnet, dass** , wenn zwischen der Getriebeeingangswelle (5) und der Antriebsseite (3) der Kupplung (K) ein bestimmter Schlupf und/oder eine bestimmte Drehzahldifferenz, insbesondere zu einem fünften Zeitpunkt (t₅), ermittelt wird, die dann anliegende bestimmte zweite Synchronisationskraft ermittelt und diese zur Bestimmung des Kisspointes der Kupplung (K) verwendet bzw. herangezogen wird, insbesondere dann das zu diesem Zeitpunkt (t₅) bestehende Synchronisationsmoment (M_{sync}) ermittelt wird.

3. Verfahren nach Anspruch 2, **dadurch gekennzeichnet, dass** die Synchronisationsvorrichtung (S1) in ihre Neutralstellung verbracht wird, so dass die Drehzahl (n_{fW}) der Getriebeeingangswelle (5) sich der Drehzahl (nₘₒₜ) der Antriebsseite (3) der Kupplung (K) betragsmäßig annähert bzw. im Wesentlichen auf die Drehzahl (nₘₒₜ) der Antriebsseite (3) der Kupplung (K) gebracht wird, insbesondere die Drehzahl (nₘₒₜ) der Antriebsseite (3) der Kupplung (K) zu einem sechsten Zeitpunkt (t₆) im Wesentlichen erreicht.

4. Verfahren nach Anspruch 3, **dadurch gekennzeichnet, dass** die Kupplung (K) mit einem maximalen Kupplungsdruck (M_{Kupmax}) nach dem fünften Zeitpunkt (t₅) oder nach dem sechsten Zeitpunkt (t₆), geschlossen wird, wobei die Drehzahl (n_{fW}) der Getriebeeingangswelle (5) sich der Drehzahl (nₘₒₜ) der Antriebsseite (3) der Kupplung (K) annähert bzw. im Wesentlichen auf die Drehzahl (nₘₒₜ) der Antriebsseite (3) der Kupplung (K) gebracht wird, insbesondere die Drehzahl (nₘₒₜ) der Antriebsseite (3) der Kupplung (K) dann zu dem sechsten Zeitpunkt (t₆) im Wesentlichen bereits erreicht hat.

5. Verfahren nach einem der Ansprüche 2 oder 3, **dadurch gekennzeichnet, dass** die Synchronisationsvorrichtung (S1) mit der zuvor ermittelten zweiten Synchronisationskraft, nach dem Anliegen des maximalen Kupplungsdrucks (M_{Kupmax}) geschlossen wird und hiernach der Kupplungsdruck, insbesondere kontinuierlich reduziert wird und dass, insbesondere zu einem siebten Zeitpunkt (t₇), dann wenn die zweite Synchronisationskraft den aktuell dann anliegenden Kupplungsdruck betragsmäßig übersteigt, die Drehzahl der Getriebeeingangswelle (5) von der Drehzahl (nₘₒₜ) der Antriebsseite (3) der Kupplung (K) abreißt, und dass wenn, insbesondere zu einem achten Zeitpunkt (t₈) ein bestimmter Schlupf und/oder eine bestimmte Drehzahldifferenz zwischen der Getriebeeingangswelle (5) und der Antriebsseite (3) der Kupplung (K) anliegt hierauf basierend dann der Kisspoint der Kupplung (K) ermittelt wird.

## Claims

1. Method for the determination of transmission and/or clutch parameters of an automatic transmission (1), which has at least one clutch (K), of a motor vehicle for the basic calibration of the automatic transmission (1), in particular of an automated manual transmission and/or a double clutch transmission (1a), a drag torque, or a drag torque and the kiss point of the clutch, being determined with the aid of at least one actuable synchronization apparatus (S1) of a gear stage (G3) of the transmission, the clutch (K) having at least one drive side (3) which can be operatively connected and/or is operatively connected to an internal combustion engine output shaft (2) and at least one output side (4) which is operatively connected to at least one transmission input shaft (5), a transmission output shaft and/or a drive shaft/drive shafts of the transmission being blocked, the drive side (3) of the clutch (K) being driven, the drive side (3) of the clutch (K) being driven with the aid of an electric motor, there being at least one freewheel-shifted gear stage (Gl), and the drive side (3) of the clutch (K) being driven by the electric motor in a rotational direction which is reversed with respect to the rotational direction of the internal combustion engine output shaft (2), **characterized in that,** in a first step at a first time (t₁), the clutch (K) is closed by way of a defined clutch force and a defined clutch torque (M_{Kup}) is realized, **in that** the rotational speed (n_{fW}) of the transmission input shaft (5) is increased in terms of magnitude afterwards to the rotational speed (nₘₒₜ) of the drive side (3) of the clutch (K) and/or, at a second time (t₂), the rotational speed (n_{fW}) of the transmission input shaft (5) reaches substantially the rotational speed of the drive side of the clutch, in particular with the retention of a minimum slip and/or a stationary differential rotational speed, **in that**, in a second step at a third time (t₃), the synchronization apparatus (S1) is actuated, namely a synchronization operation of the said gear stage (G3) of the transmission is started with the aid of the synchronization apparatus (S1), and the synchronization apparatus (S1) is loaded with a synchronization force which, in particular, rises continuously, and **in that**, in the case of a defined first synchronization force which is then determined at a fourth time (t₄), the rotational speed (n_{fW}) of the transmission input shaft (5) breaks off from the rotational speed (nₘₒₜ) of the drive shaft (3) of the clutch (K), and the drag torque of the clutch can then be determined and/or calculated as a result.

2. Method according to Claim 1, **characterized in that,** if a defined slip and/or a defined rotational speed difference, in particular at a fifth time (t₅), is determined between the transmission input shaft (5) and the drive side (3) of the clutch (K), the defined second synchronization force which then prevails is determined, and this is used or applied for the determination of the kiss point of the clutch (K), in particular the synchronization torque (M_{sync}) which exists at this time (t₅) is then determined.

3. Method according to Claim 2, **characterized in that** the synchronization apparatus (S1) is moved into its neutral position, with the result that the rotational speed (n_{fW}) of the transmission input shaft (5) approaches the rotational speed (nₘₒₜ) of the drive side (3) of the clutch (K) in terms of magnitude or is brought substantially to the rotational speed (nₘₒₜ) of the drive side (3) of the clutch (K), in particular substantially reaches the rotational speed (nₘₒₜ) of the drive side (3) of the clutch (K) at a sixth time (t₆).

4. Method according to Claim 3, **characterized in that** the clutch (K) is closed by way of a maximum clutch pressure (M_{Kupmax}) after the fifth time (t₅) or after the sixth time (t₆), the rotational speed (n_{fW}) of the transmission input shaft (5) approaching the rotational speed (nₘₒₜ) of the drive side (3) of the clutch (K) or being brought substantially to the rotational speed (nₘₒₜ) of the drive side (3) of the clutch (K), in particular then already having substantially reached the rotational speed (nₘₒₜ) of the drive side (3) of the clutch (K) at the sixth time (t₆).

5. Method according to either of Claims 2 and 3, **characterized in that** the synchronization apparatus (S1) is closed by way of the previously determined second synchronization force after the prevailing of the maximum clutch pressure (M_{Kupmax}) , and the clutch pressure is reduced afterwards, in particular continuously, and **in that**, in particular at the seventh time (t₇), when the second synchronization force exceeds the clutch pressure which then currently prevails in terms of magnitude, the rotational speed of the transmission input shaft (5) breaks off from the rotational speed (nₘₒₜ) of the drive side (3) of the clutch (K), and **in that**, if, in particular at an eighth time (t₈), a defined slip and/or a defined rotational speed difference prevails between the transmission input shaft (5) and the drive side (3) of the clutch (K), the kiss point of the clutch (K) is then determined in a manner which is based thereon.

## Revendications

1. Procédé de détermination de paramètres de transmission et/ou d'embrayage d'une transmission automatique (1), comportant au moins un embrayage (K), d'un véhicule automobile pour effectuer l'étalonnage de base de la transmission automatique (1), en particulier d'une transmission à changement de vitesse manuel automatisée et/ou d'une transmission à double embrayage (1a) ,
un couple de traînée ou un couple de traînée et le point de léchage de l'embrayage étant déterminés à l'aide d'au moins un dispositif de synchronisation commandable (S1) d'un étage de vitesse (G3) de la transmission, l'embrayage (K) comportant au moins un côté entraînement (3) qui peut être fonctionnellement relié, et/ou qui est fonctionnellement relié, à un arbre de sortie (2) du moteur à combustion interne et au moins un côté sortie (4) qui est fonctionnellement relié à au moins un arbre d'entrée de transmission (5), un arbre de sortie de transmission et/ou un ou plusieurs arbres d'entraînement de la transmission étant en cours de blocage ou à l'état bloqué, le côté entraînement (3) de l'embrayage (K) étant entraîné, le côté entraînement (3) de l'embrayage (K) étant entraîné à l'aide d'un moteur électrique, au moins un étage de vitesse (G1) librement engagé étant présent et le côté entraînement (3) de l'embrayage (K) étant entraîné par le moteur électrique dans un sens de rotation opposé au sens de rotation de l'arbre de sortie (2) du moteur à combustion interne,
**caractérisé en ce que**, dans une première étape, à un premier instant (t₁), l'embrayage (K) est engagé avec une force d'embrayage déterminée et un couple d'embrayage déterminé (Mₖᵤₚ) est réalisé, **en ce que** la vitesse de rotation (n_{fW}) de l'arbre d'entrée de transmission (5) est alors élevée en valeur absolue à la vitesse de rotation (nₘₒₜ) du côté entraînement (3) de l'embrayage (K) et/ou la vitesse de rotation (n_{fW}) de l'arbre d'entrée de transmission (5) atteint à un deuxième instant (t₂) sensiblement, en particulier tout en maintenant un patinage minimum et/ou une vitesse de rotation différentielle stationnaire, la vitesse de rotation du côté entraînement de l'embrayage, **en ce que** dans une deuxième étape, à un troisième instant (t₃), le dispositif de synchronisation (S1) est commandé, à savoir un processus de synchronisation dudit étage de vitesse (G3) de la transmission est démarré à l'aide du dispositif de synchronisation (S1) et le dispositif de synchronisation (S1) est soumis à une force de synchronisation, en particulier en augmentation continue, et ce que, avec une première force de synchronisation alors déterminée, à un quatrième instant (t₄) la vitesse de rotation (n_{fW}) de l'arbre d'entrée de transmission (5) s'écarte de la vitesse de rotation (nₘₒₜ) du côté entraînement (3) de l'embrayage (K) et ainsi le couple de traînée de l'embrayage peut alors être déterminé et/ou calculé.

2. Procédé selon la revendication 1, **caractérisé en ce que**, lorsqu'un glissement déterminé et/ou une différence de vitesse de rotation déterminée, notamment à un cinquième instant (t₅), est déterminé entre l'arbre d'entrée de transmission (5) et le côté entraînement (3) de l'embrayage (K), la deuxième force de synchronisation spécifique alors appliquée est déterminée et celle-ci est utilisée ou appelée pour déterminer le point de léchage de l'embrayage (K), en particulier le couple de synchronisation (M_{Sync}) présent à cet instant (t₅) est alors déterminé.

3. Procédé selon la revendication 2, **caractérisé en ce que** le dispositif de synchronisation (S1) est amené dans sa position neutre de sorte que la vitesse de rotation (n_{fW}) de l'arbre d'entrée de transmission (5) s'approche en valeur absolue de la vitesse de rotation (nₘₒₜ) du côté entraînement (3) de l'embrayage (K) ou est amenée sensiblement à la vitesse de rotation (nₘₒₜ) du côté entraînement (3) de l'embrayage (K), en particulier atteint sensiblement la vitesse de rotation (nₘₒₜ) du côté entraînement (3) de l'embrayage (K) à un sixième instant (t₆).

4. Procédé selon la revendication 3, **caractérisé en ce que** l'embrayage (K) est engagé avec une pression d'embrayage maximale (M_{Kupmax}) après le cinquième instant (t₅) ou après le sixième instant (t₆), la vitesse de rotation (n_{fW}) de l'arbre d'entrée de transmission (5) s'approche de la vitesse de rotation (nₘₒₜ) du côté entraînement (3) de l'embrayage (K) ou est sensiblement amenée à la vitesse de rotation (nₘₒₜ) du côté entraînement (3) de l'embrayage (K), en particulier a alors sensiblement déjà atteint au sixième instant (t₆) la vitesse de rotation (nₘₒₜ) du côté entraînement (3) de l'embrayage (K).

5. Procédé selon l'une des revendications 2 ou 3, **caractérisé en ce que** le dispositif de synchronisation (S1) est engagé avec la deuxième force de synchronisation préalablement déterminée après l'application de la pression d'embrayage maximale (M_{Kupmax}) puis la pression d'embrayage est réduite, en particulier en continu, et **en ce que**, en particulier à un septième instant (t₇), c'est seulement lorsque la deuxième force de synchronisation dépasse en valeur absolue la pression d'embrayage actuellement appliquée que la vitesse de l'arbre d'entrée de transmission (5) s'éloigne de la vitesse de rotation (nₘₒₜ) du côté entraînement (3) de l'embrayage (K), et **en ce que**, en cas d'application, notamment à un huitième instant (t₈), d'un glissement déterminé et/ou d'une différence de vitesse de rotation déterminée entre l'arbre d'entrée de transmission (5) et le côté entraînement (3) de l'embrayage (K), alors le point de léchage de l'embrayage (K) est déterminé sur cette base.
